# EUROPEAN PATENT SPECIFICATION

(11) **EP 1 406 324 B1**
(45) Date of publication and mention of the grant of the patent: **28.12.2011**
(21) Application number: 02022478.8
(22) Date of filing: 04.10.2002
(51) Int. Cl.: H01M 2/34, H01M 2/10

(54) **Portable electronic system equipped with a spare battery device**
Tragbares elektronisches System mit Reservebatteriesystem
Système portable électronique équipé d'une batterie auxilliaire

(43) Date of publication of application: 07.04.2004
(73) Proprietor: HTC Corporation, Taoyuan County 330 (TW)
(72) Inventor: Lin, Chien-Ming, Shindian City, Taipei (TW)
(74) Representative: Weber, Joachim

(56) References cited:
- EP-A- 0 511 740
- WO-A-97/12414
- US-A- 5 898 290

## Description

### BACKGROUND OF THE INVENTION

### 1. Field of the Invention

This invention relates to a portable electronic system, and more particularly to a portable electronic system equipped with a spare battery device.

### 2. Description of the Related Art

The rapid development of digital electronic products makes people's life more convenient. And a lot of portable devices, such as mobile phones, notebooks, or Personal Digital Assistance (PDA), and so on, have been developed rapidly. It highly promotes the convenience of people's life and the efficiency of work. Portable devices, in the circumstance without an external power source, totally rely on batteries to supply the necessary operating power. It is, therefore, very important for the portable devices to have a stable power source supplied.

When a battery has been used for a certain period of time, the battery will not be able to stably supply necessary power to a portable device. Therefore, it is necessary to provide a new battery as a new power source of the portable device.

Besides, it is necessary for a spare battery to have a power-leakage-protection appliance to avoid power leakage when the spare battery is in an idle status. In the present time, a switch is used to be the power-leakage-protection appliance to achieve the goal. That is, a switch is installed into a battery. When the battery is in an idle status, the switch is turned off manually to disable the battery from supplying power. When the battery is needed, the switch is turned on manually to enable the battery for supplying power.
EP 0511740 discloses a battery powered device. A battery powered energy-using device is disclosed which operably distinguishes between batteries having standard and non-standard terminal configurations. The battery compartment in the device is provided with a terminal having first and second insulated contacts, one contact configured to make contact with a battery of standard terminal configuration and the second contact adapted to make contact with a second terminal. In one embodiment the device is associated with charging circuitry which is adapted to recharge a rechargeable battery having the special non-standard terminal configuration, while permitting discharge but not recharge of a primary battery having a standard terminal configuration.
WO 97/12414 discloses a battery pack having a disconnection switch circuit. A battery pack having a protruding contact (14) is provided with a disconnect switch circuit. The circuit comprises at least one battery cell (22), and a mechanical switch (24) which controls the operation of an electronic switch circuit (36). A latch member (16) is provided for attaching the battery pack to a device to be powered, and is moveable between a first and second position, and is biased by a spring means to the first position. In the first position, the latch member acts on the mechanical switch such that the electronic switch circuit disconnects the battery contact from the battery cell or cells. When the latch member is moved to the second position, the circuit operates to connect the battery contact to the battery cell of cells.
US Patent No. 5,898,290 discloses a battery pack with capacity and pre-removal indicators. A battery capacity monitoring system readily indicates the remaining capacity of an uninserted battery pack upon an operator's request. Such request may involve the touching of one or more contacts disposed on the battery pack. The battery pack also includes a display and a communication means for communicating capacity information to the device in which it may be installed. The communication means may also be used to display status when the battery pack is not inserted. When inserted a device, the battery pack and device participate to determine time estimates for remaining battery life based on known device loading characteristics and current battery capacity. An operator viewing such information may more adequately determine the usage value of the current battery charge. Moreover, the battery pack and corresponding device are configured to detect the beginning of the process of removing a battery pack. In response, the device saves operational states and data before losing power. Such stored information may be restored upon insertion of another battery pack into the device, permitting the operator to continue where they left off.

There are some disadvantages using the switch as the power-leakage-protection appliance, which are: (1) the cost of manufacturing and the volume of the portable device increase because a switch is needed; (2) a user may forget to turn off an idle battery due to the manual operation of changing the statuses of the switch. If, at this moment, the positive and negative electrodes of that battery are incidentally conducted, for example, there is just a conductor conducting the positive and negative electrodes, the power of the battery will start to leak out.

### SUMMARY OF THE INVENTION

It is therefore an object of the invention to provide a portable electronic system equipped with a spare battery device. When the power of the presently used battery is running out, it is very convenient to use a spare battery as a new power supply of a portable device. And the spare battery can release power only when it is coupled to the portable device physically. It is therefore able to solve the power leakage problem of the idle spare battery.
The invention achieves the above-identified objects by providing a portable electronic system as defined in independent claim 1. The dependent claims define preferred embodiments thereof.

The solution of the above identified objects is achieved by the features of claims 1 and 8, respectively. The dependent claims contain advantageous embodiments of the present invention.

By adjusting the coupling relationship between the first fixer unit and the second fixer unit, the resilient object can touch the protrusion, and every output contact pad can be coupled to every associated input contact pad. The control unit outputs the power from the spare battery device according to the voltage of the first node,

### BRIEF DESCRIPTION OF THE DRAWINGS

Objects, features, and advantages of the invention will become apparent from the following detailed description of the preferred but non-limiting embodiments. The description is made with reference to the accompanying drawings, in which:

Figure 1A illustrates a side view of a portable electronic system 100 equipped with a spare battery device 104 according to the invention.

Figure 1B is an illustration of a bottom plate B of a spare battery device 104 according to the invention.

Figure 1C is an illustration of a bottom plate A of a portable device 102 according to the invention.

Figure 2A is an illustration of the portable electronic system 100 when the portable device 102 uses an ordinary battery device as the power source.

Figure 2B is an illustration of the portable electronic system 100 when the portable device 102 uses a spare battery device 104 as the power source.

Figure 2C is an illustration of the portable electronic system 100 when the portable device 102 is connected to the spare battery device 104 through the protrusion 112 and the spring 110 without the contact pads 116 and 118 being in contact with each other.

### DESCRIPTION OF THE PREFERRED EMBODIMENT

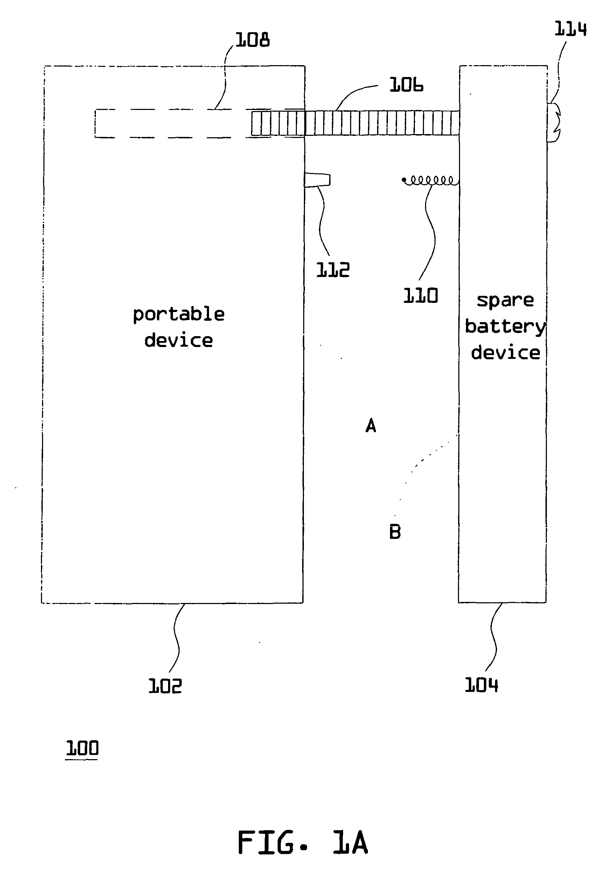

FIG. 1A illustrates a side view of a portable electronic system equipped with the spare battery device 100 according to the invention. The feature of the present invention is that only when the spare battery device 104 physically coupled to the portable device 102, which means that the spare battery device 104 is used as the power source of the portable device 102, the storing power of the spare battery device 104 can be outputted to the portable device 102. When the power of the presently used battery runs out, the user can conveniently use the spare battery device 104 as a new power source of the portable device 102. And it is not easy for the spare battery device 104 in the idle status to leak out the storing power due to the external factors. The spare battery device 104 includes a first fixer unit 106; and the portable device 102 includes a second fixer unit 108. The spare battery device 104 can be coupled to the portable device 102 by coupling the first fixer unit 106 and the second fixer unit 108. As FIG. 1A shows, the first fixer unit 106 of the spare battery device 104 is a screw having a thread. And there is a knob 114 at the bottom of the screw 106. Moreover, the second fixer unit 108 of the portable device 102 is a nut. The nut 108 has a thread as well in order to turn the screw 106 fastened to the nut 108.

In addition, the portable device 102 includes an electrically conductive covering, on which there is a protrusion 112. And the spare battery device 104 includes an electrically conductive resilient object 110. In FIG. 1A, the resilient object is a spring. The spring 110 protrudes out from the bottom plate B of the spare battery device 104. And the spring is located on the bottom plate B at the location associated with the location of the protrusion 112 on the bottom plate A.

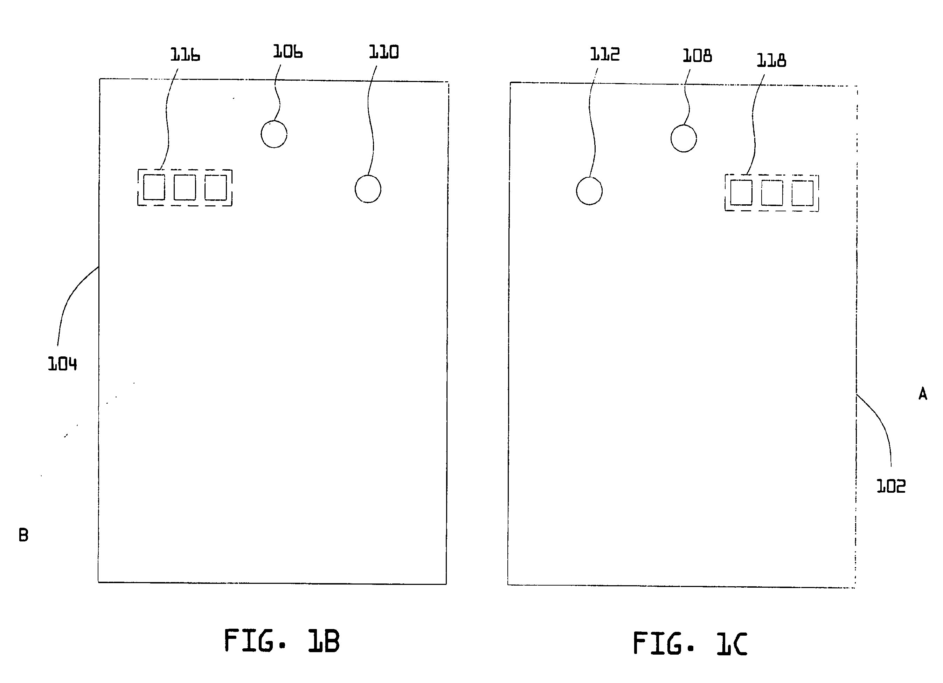

FIG. 1B shows the illustration of the bottom plate B of the spare battery device 104 according to the present invention. On the bottom plate B, there are not only the screw 106 and the spring 110, but also output contact pads 116. The power stored in the spare battery device 104 is outputted via the output contact pads 116. FIG. 1C illustrates the bottom plate A of the portable device 102 according to the present invention. On the bottom plate A, there are not only the nut 108 and the protrusion 112, but also input contact pads 118. Power is inputted into the portable device 102 via those input contact pads 118. Every output contact pad 116 on the bottom plate B of the spare battery device 104 is located at the position associated with the position of every input contact pads 118 on the bottom plate A of the portable device 102.

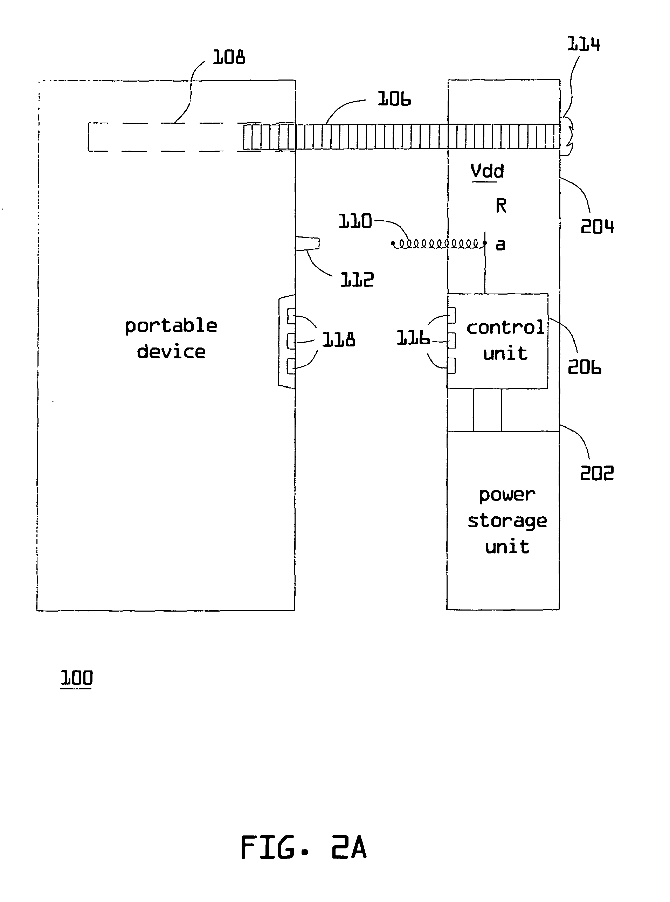

FIG. 2A is the illustration of the portable electronic system 100 when the embedded battery is used as the power source of the portable device 102. The spare battery device 104 according to the present invention includes a power storage unit 202 and a sensory control unit 204. The power storage unit is for storing power; and the sensory control unit 204 is for controlling the power stored in the spare battery device 104 to be outputted to the portable device 102 when the spare battery device 104 is used as a new power source of the portable device 102. The sensory control unit 204 includes a constant voltage source Vdd, a resistor R coupled to the constant voltage source Vdd, a spring 110, and a control unit 206. The spring 110 is coupled to the resistor R at the node a, and also protrudes out from the bottom plate B of the spare battery device 104. The control unit 206 is respectively coupled to the resistor R and the spring 110 at the node a, and is also coupled to the power storage unit 202. In addition, as FIG. 1B shows, the output contact pads 116 are equipped on the surface of the control unit 206.

The control unit 206 can detect the voltage of the node a, and accordingly control the power output of the spare battery device 104. The control method is described as following. When the embedded battery is used as the power source of the portable device 102, the screw 106 can fasten the spare battery device 104 to the portable device 102, but let the protruding spring 110 on the bottom plate B of the spare battery device 104 not connect with the protrusion 112 on the bottom plate A of the portable device 102. In this situation, the voltage of the node a is equal to the output voltage of the constant voltage source Vdd. The control unit 206 does not output the power stored in the power storage unit 202 via the output contact pads 116 since the voltage of the node a is equal to Vdd.

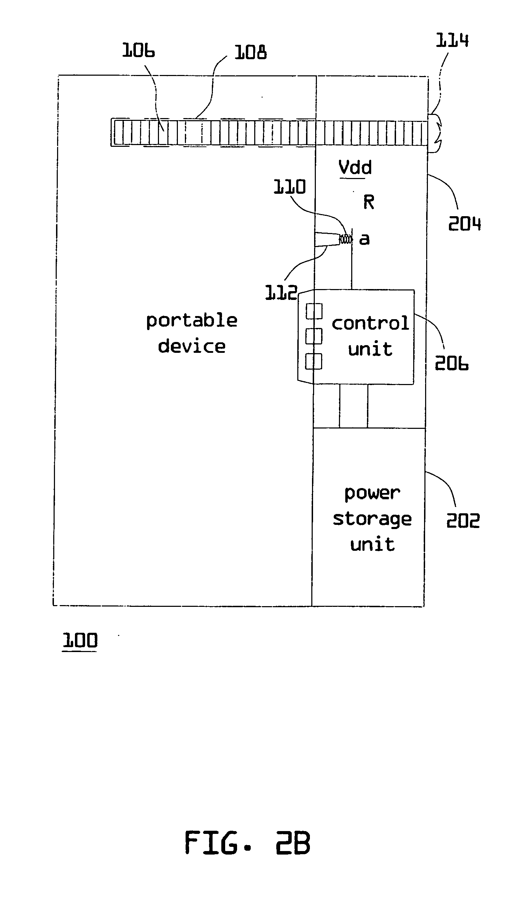

FIG. 2B is an illustration of the portable electronic system 100 when the spare battery device 104 is used as the power source of the portable device 102. When the spare battery device 104 is used as one of the power source of the portable device 102, the user can screw the screw 106 into the nut 108 by turning the knob 114. By turning the knob 114, the bottom plate A of the portable device 102 will be closer and closer to the bottom plate B of the spare battery device 104 until both of them are coupled to each other. Then, the spring 110 protruding out from the bottom plate B can be connected with the protrusion 112, and each output contact pads 116 of the spare battery device 104 can be coupled to the associated input contact pads 118 of the portable device 102.

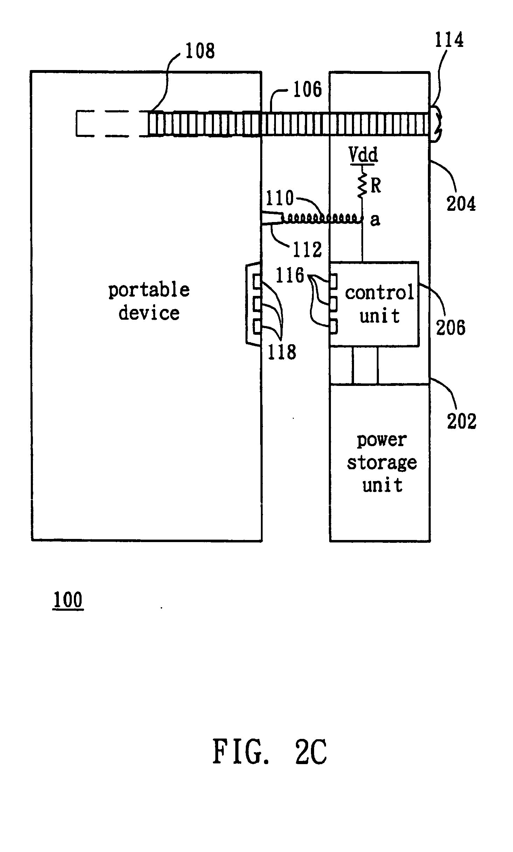

When the spring 110 connects with the protrusion 112, the voltage of the node a will drop due to the electrically conduction of the covering of the portable device 102, (At this moment, the node a can be supposed to connect to the ground.) According to the low voltage of the node a, the control unit 206 can control the power output from the power storage unit 202 to be inputted into the portable device 102 via the output contact pads 116 and the input contact pads 118. Therefore, the portable device 102 can use the spare battery device 104 as the auxiliary power source to maintain the operation of the portable device 102. FIG. 2C shows that during the user screws the screw 106 into the nut 108, the spring 110 is connected with the protrusion 112 first but each output contact pads 116 of the spare battery device 104 is not yet coupled to the associated input contact pads 118 of the portable device 102. In other words, as shown in FIG. 2A~2C, the spring 110 is connected with the protrusion 112 before each output contact pads 116 of the spare battery device 104 is coupled to the associated input contact pads 118 of the portable device 102.

The above-mentioned portable device 102 can be a mobile phone, a notebook, a Personal Digital Assistance (PDA), or other portable electronic devices. Basically, this invention can be applied to any portable device 102 with an electrically conductive covering.

The above embodiment reveals that the invention, a portable electronic system equipped with a spare battery device, uses fixer units to couple a spare battery device with the portable device. It is very convenient for a user to physically and electrically couple the spare battery to the portable device and to use a spare battery as a new power supply of the portable device. Beside, only when the spare battery detects that it has connected with the portable device, will the power stored in the spare battery outputted to the portable device. Therefore, the conventional power leakage problem can be solved.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A portable electronic system (100) at least comprising:
a spare battery device (104), at least comprising:
a first fixer unit (106);
a power storage unit (202) for storing power; and
a sensory control unit (204) coupled to the power storage unit (202);
a portable device (102), coupled to the spare battery device (104), at least comprising:
a plurality of input contact pads (118) for receiving power from the spare battery device (104), wherein the location of each of the output contact pads (116) on the spare battery device (104) is associated with the location of each of the input contact pads (118) of the portable device (102);
**characterized in that**:
the sensory control unit (204) at least comprises:
a constant voltage source (Vdd);
a resistor (R), coupled to the constant voltage source (Vdd);
a resilient object (110) coupled to the resistor (R) at a first node (a), and protruding out from the spare battery device (104), wherein the resilient object (110) is an electric conductor; and
a control unit (206) coupled to the resistor (R) and the resilient object (110) at the first node (a), coupled to the power storage unit (202), and equipped with a plurality of output contact pads (116) for outputting power from the spare battery device (104); and
the portable device (102) comprising:
a second fixer unit (108) adjustably coupled to the first fixer unit (106) according to a first, a second or third coupling relationship therebetween, for fastening the spare battery device (104) to the portable device (102);
a covering being electrically conductive, wherein the covering further comprises a protrusion (112) and the location of the protrusion (112) on the portable device (102) is associated with the location of the resilient object (110) of the spare battery device (104);
wherein when the second fixer unit (108) is coupled to the first fixer unit (106) according to the first coupling relationship, the resilient object (110) is disconnected to the protrusion (112), the control unit (206) detects that a voltage of the first node (a) is equal to an output voltage of the constant voltage source (Vdd) so that the control unit (206) controls the power storage unit (202)not to output power to the portable device;
wherein when the second fixer unit (108) is coupled to the first fixer unit (106) according to the second coupling relationship, the resilient object (110) is connected to the protrusion (112) of the portable device (102), the output contact pads (116) are not yet coupled to the input contact pads (118), the control unit (206) detects that the voltage of the first node (a) is changed, and the spare battery device does not output power to the portable device (102); and
wherein when the second fixer unit (108) is coupled to the first fixer unit (106) according to the third coupling relationship, the resilient object (110) is connected to the protrusion (112) of the portable device (102), the control unit (206) detects that the voltage of the first node (a) is dropped, each of the output contact pads (116) of the spare battery device (104) is coupled to the associated input contact pads (118) of the portable device (102) so that the control unit (206) controls the power storage unit (202) to output power to the portable device (102) according to the changed voltage of the first node (a).

2. The portable electronic system according to claim 1, wherein the resilient object (110) is a spring.

3. The portable electronic system according to claim 1, wherein the first fixer unit (106) is a screw, and the second fixer unit (108) is a nut.

4. The portable electronic system according to claim 1, wherein the portable device (102) is a mobile phone.

5. The portable electronic system according to claim 1, wherein the portable device (102) is a notebook.

6. The portable electronic system according to claim 1, wherein the portable device (102) is a Personal Digital Assistance (PDA).

## Patentansprüche

1. Tragbares elektronisches System (100), das zumindest umfasst:
eine Ersatzbatterievorrichtung (104), die zumindest umfasst:
eine erste Befestigungseinheit (106);
eine Stromspeichereinheit (202) zum Speichern von Strom; und
eine sensorische Steuereinheit (204), die mit der Stromspeichereinheit (202) verbunden ist;
eine tragbare Vorrichtung (102), die mit der Ersatzbatterievorrichtung (104) verbunden ist, die zumindest umfasst:
eine Vielzahl von Eingangskontaktfeldern (118) zum Empfangen von Strom von der Ersatzbatterievorrichtung (104), wobei die Position jedes der Ausgangskontaktfelder (116) auf der Ersatzbatterievorrichtung (104) mit der Position jedes der Eingangskontaktfelder (118) der tragbaren Vorrichtung (102) in Zusammenhang steht;
**dadurch gekennzeichnet, dass**:
die sensorische Steuereinheit (204) zumindest umfasst:
eine Konstantspannungsquelle (Vdd);
einen Widerstand (R), der mit der Konstantspannungsquelle (Vdd) verbunden ist;
ein elastisches Objekt (110), das mit dem Widerstand (R) an einem ersten Knoten (a) verbunden ist und aus der Ersatzbatterievorrichtung (104) hervorsteht, wobei das elastische Objekt (110) ein elektrischer Leiter ist; und
eine Steuereinheit (206), die mit dem Widerstand (R) und dem elastischen Objekt (110) am ersten Knoten (a) verbunden ist, mit der Stromspeichereinheit (202) verbunden ist und mit einer Vielzahl von Ausgangskontaktfeldern (116) zum Ausgeben von Strom aus der Ersatzbatterievorrichtung (104) ausgestattet ist; und
die tragbare Vorrichtung (102) umfasst:
eine zweite Befestigungseinheit (108), die einstellbar mit der ersten Befestigungseinheit (106) gemäß zwischen diesen bestehenden ersten,
zweiten oder dritten Verbindungsverhältnis diesen verbunden ist, um die Ersatzbatterievorrichtung (104) an der tragbaren Vorrichtung (102) zu befestigen;
eine Abdeckung, die elektrisch leitend ist, wobei die Abdeckung ferner einen Vorsprung (112) umfasst und die Position des Vorsprungs (112) auf der tragbaren Vorrichtung (102) mit der Position des elastischen Objekts (110) der Ersatzbatterievorrichtung (104) in Verbindung steht;
wobei, wenn die zweite Befestigungseinheit (108) gemäß dem ersten Verbindungsverhältnis mit der ersten Befestigungseinheit (106) verbunden ist, das elastische Objekt (110) von dem Vorsprung (112) getrennt ist, die Steuereinheit (206) erfasst, dass eine Spannung des ersten Knotens (a) gleich einer Ausgangsspannung der Konstantspannungsquelle (Vdd) ist, so dass die Steuereinheit (206) die Stromspeichereinheit (202) steuert, um keinen Strom zur tragbaren Vorrichtung auszugeben;
wobei, wenn die zweite Befestigungseinheit (108) gemäß dem zweiten Verbindungsverhältnis mit der ersten Befestigungseinheit (106) verbunden ist, das elastische Objekt (110) mit dem Vorsprung (112) der tragbaren Vorrichtung (102) verbunden ist, die Ausgangskontaktfelder (116) noch nicht mit den Eingangskontaktfeldern (118) verbunden sind, die Steuereinheit (206) erfasst, dass sich die Spannung des ersten Knotens (a) verändert hat, und die Ersatzbatterievorrichtung keinen Strom zur tragbaren Vorrichtung (102) ausgibt; und
wobei, wenn die zweite Befestigungseinheit (108) gemäß dem dritten Verbindungsverhältnis mit der ersten Befestigungseinheit (106) verbunden ist, das elastische Objekt (110) mit dem Vorsprung (112) der tragbaren Vorrichtung (102) verbunden ist, die Steuereinheit (206) erfasst, dass die Spannung des ersten Knotens (a) gefallen ist, jedes der Ausgangskontaktfelder (116) der Ersatzbatterievorrichtung (104) mit den zugehörigen Eingangskontaktfeldern (118) der tragbaren Vorrichtung (102) verbunden ist, so dass die Steuereinheit (206) die Stromspeichereinheit (202) gemäß der veränderten Spannung des ersten Knotens (a) steuert, um Strom zur tragbaren Vorrichtung (102) auszugeben.

2. Tragbares elektronisches System nach Anspruch 1, wobei das elastische Objekt (110) eine Feder ist.

3. Tragbares elektronisches System nach Anspruch 1, wobei die erste Befestigungseinheit (106) eine Schraube und die zweite Befestigungseinheit (108) eine Mutter ist.

4. Tragbares elektronisches System nach Anspruch 1, wobei die tragbare Vorrichtung (102) ein Mobiltelefon ist.

5. Tragbares elektronisches System nach Anspruch 1, wobei die tragbare Vorrichtung (102) ein Notebook ist.

6. Tragbares elektronisches System nach Anspruch 1, wobei die tragbare Vorrichtung (102) ein Organizer (PDA - Personal Digital Assistance) ist.

## Revendications

1. Système électronique portable (100) comprenant au moins :
un dispositif de batterie de rechange (104), comprenant au moins :
une première unité de fixage (106) ;
une unité de stockage d'énergie (202) pour stocker de l'énergie ; et
une unité de commande sensorielle (204) couplée à l'unité de stockage d'énergie (202) ;
un dispositif portable (102), couplé au dispositif de batterie de rechange (104), comprenant au moins :
une pluralité de plots de contact d'entrée (118) pour recevoir de l'énergie en provenance du dispositif de batterie de rechange (104), dans lequel l'emplacement de chacun des plots de contact de sortie (116) sur le dispositif de batterie de rechange (104) est associé à l'emplacement de chacun des plots de contact d'entrée (118) du dispositif portable (102) ;
**caractérisé en ce que** :
l'unité de commande sensorielle (204) comprend au moins :
une source de tension constante (Vdd) ;
une résistance (R), couplée à la source de tension constante (Vdd);
un objet résilient (110) couplé à la résistance (R) au niveau d'un premier noeud (a), et faisant saillie hors du dispositif de batterie de rechange (104), dans lequel l'objet résilient (110) est un conducteur électrique ; et
une unité de commande (206) couplée à la résistance (R) et à l'objet résilient (110) au niveau du premier noeud (a), couplée à l'unité de stockage d'énergie (202), et équipée d'une pluralité de plots de contact de sortie (116) pour générer en sortie de l'énergie à partir du dispositif de batterie de rechange (104) ; et
le dispositif portable (102) comprenant :
une seconde unité de fixage (108) couplée de manière réglable à la première unité de fixage (106) selon une première, une deuxième ou une troisième relation de couplage entre ces unités, en vue de fixer le dispositif de batterie de rechange (104) au dispositif portable (102) ;
un revêtement électriquement conducteur, dans lequel le revêtement comprend en outre une saillie (112) et l'emplacement de la saillie (112) sur le dispositif portable (102) est associé à l'emplacement de l'objet résilient (110) du dispositif de batterie de rechange (104) ;
dans lequel, lorsque la seconde unité de fixage (108) est couplée à la première unité de fixage (106) selon la première relation de couplage, l'objet résilient (110) est déconnecté de la saillie (112), l'unité de commande (206) détecte qu'une tension du premier noeud (a) est égale à une tension de sortie de la source de tension constante (Vdd), de sorte que l'unité de commande (206) commande à l'unité de stockage d'énergie (202) de ne pas générer en sortie de l'énergie vers le dispositif portable ;
dans lequel, lorsque la seconde unité de fixage (108) est couplée à la première unité de fixage (106) selon la deuxième relation de couplage, l'objet résilient (110) est connecté à la saillie (112) du dispositif portable (102), les plots de contact de sortie (116) ne sont pas encore couplés aux plots de contact d'entrée (118), l'unité de commande (206) détecte que la tension du premier noeud (a) est modifiée, et le dispositif de batterie de rechange ne génère pas d'énergie en sortie vers le dispositif portable (102) ; et
dans lequel, lorsque la seconde unité de fixage (108) est couplée à la première unité de fixage (106) selon la troisième relation de couplage, l'objet résilient (110) est connecté à la saillie (112) du dispositif portable (102), l'unité de commande (206) détecte que la tension du premier noeud (a) a chuté, chacun des plots de contact de sortie (116) du dispositif de batterie de rechange (104) est couplé aux plots de contact d'entrée associés (118) du dispositif portable (102), de sorte que l'unité de commande (206) commande à l'unité de stockage d'énergie (202) de générer en sortie de l'énergie vers le dispositif portable (102) selon la tension modifiée du premier noeud (a).

2. Système électronique portable selon la revendication 1, dans lequel l'objet résilient (110) est un ressort.

3. Système électronique portable selon la revendication 1, dans lequel la première unité de fixage (106) est une vis, et la seconde unité de fixage (108) est un écrou.

4. Système électronique portable selon la revendication 1, dans lequel le dispositif portable (102) est un téléphone mobile.

5. Système électronique portable selon la revendication 1, dans lequel le dispositif portable (102) est un ordinateur portable.

6. Système électronique portable selon la revendication 1, dans lequel le dispositif portable (102) est un assistant numérique personnel (PDA).
